(19) **Europäisches Patentamt**

**European Patent Office**

**Office européen des brevets**

(11) **EP 0 915 206 B1**

(12) **EUROPEAN PATENT SPECIFICATION**

(45) Date of publication and mention
of the grant of the patent:
**28.03.2001  Bulletin 2001/13**

(51) Int Cl.⁷: **E02D 5/00**, E01F 7/04

(21) Application number: **97119408.9**

(22) Date of filing: **06.11.1997**

(54) **Wire cable anchor**

Drahtseilanker

Ancrage pour câble

(84) Designated Contracting States:
**AT CH DE ES FR IT LI**

(43) Date of publication of application:
**12.05.1999  Bulletin 1999/19**

(73) Proprietor: **Metalsald di Parimbelli Marzio & C.
S.A.S.
24100 Bergamo (IT)**

(72) Inventor: **Boldrini, Mario Lionello
20154 Milano (IT)**

(74) Representative: **Robba, Pierpaolo et al
Interpatent,
Via Caboto 35
10129 Torino (IT)**

(56) References cited:
**EP-A- 0 557 241**

## Description

The present invention relates to a wire cable anchor, particularly for anchoring protection systems against rockfall and avalanches. Anchoring devices of the above type are known and comprise a length of metal wire or rope formed as a loop or eyelet, and a portion to be secured in (cemented into) the ground, preferably a rocky ground, either directly in the rock or in a concrete block. Several components, such as wire cables, nettings and the like, provided for retaining the landslide mass or the avalanche are hooked to the loop.

A problem of such known wire cable anchors resides in their limited resistance to long term corrosion since the protection system, and particularly the anchor, can stay exposed to all weather conditions in mountain areas for many years.

Moreover the anchor portion emerging from the ground is subjected to stresses acting along variable directions, to deformations caused by large temperature changes, and to an environment favouring the corrosion (because of the presence of oxygen, water, acid soil). Conventional coatings and surface protection treatments, such as galvanization have proved to be completely ineffective with respect to the long life provided for the anchor.

EP-A-0 557 241, on which the preamble of claim 1 is based, discloses a spirally wound steel cable anchor, used in particular against rockfalls and avalanches, comprising a loop portion and a portion to be secured to the ground, wherein over the wire cable portion emerging from the ground there are fitted: a folded synthetic material sleeve extending at least over the region in which the loop is formed and in contact with the metal wire, and a metal tube or pipe, bent to conform to the shape of said loop and surrounding the synthetic material sleeve. The cable section cemented into the ground further comprises diverging portions of the synthetic material sleeve.

The synthetic material sleeve would protect the metal cable against weather influences, and the metal tube would protect the cable against wear and damages caused by the friction-generating movements of the suspended device supported by the anchor.

However the assembling of such a device is rather complicated and the resulting anchor exhibits a considerable stiffness difference between the portion jacketed by the metal tube and that encased by the plastic material tube only. The metal wire is not subjected to an axial tensile stress and the anchor is subjected to inconveniences such as the breaking of the plastic material sleeve caused by the mechanical stresses combined with those caused by temperature changes. Further, the two diverging sections of the plastic material sleeve at the grounding area can start a local crumbling of the concrete when the anchor is stressed along a direction that is not precisely axial, thus forming a passage to the water penetration.

It is an object of the present invention to overcome the above drawbacks and limitations of the prior devices and more particularly to provide a half-resilient (or partially elastic) anchor, in which the cable is subjected to tensile stresses acting along a substantially axial direction, said anchor being capable of linearly adjusting to progressive loads without causing such deformations that negatively alter the geometry and therefore the strength of the anchor, and without damaging the anchoring means connected thereto.

The invention accomplishes the above objects through a wire cable anchor as claimed in claim 1.

Additional advantageous features are recited in the dependent claims.

The invention will now be disclosed with more details with reference to a preferred but non-limiting embodiment, illustrated with reference to the attached drawings in which:

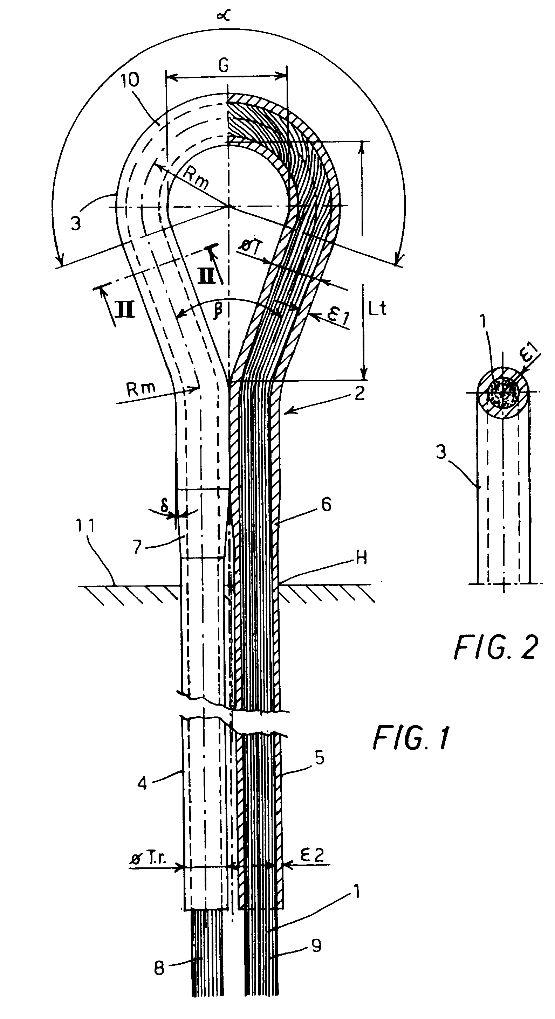

Figure 1 is a side view, partially in cross section, of an anchor according to the invention; and
Figure 2 is a transverse cross section along line II-II of Fig. 1.

With reference to the Figures, the anchor according to the invention comprises a length of metal-cable 1 formed with galvanized strands. Preferably the cable or rope is formed by spirally wound strands, although an anchor according to the invention can include a rope formed with strands twisted about a (metal or textile) core strand. The length and the diameter of the cable are selected so that they can withstand the expected loads, taking into account the nature of the terrain. Indicatively, the diameter of the cable can be between 8 and 30 mm, depending on the applied load and the foreseen application, although these values are notto be meant as limiting.

The cable 1 is folded to form an eyelet or loop 10 to which nettings or other components (not shown) to be suspended are hooked. The portion shaped as a loop and the two portions immediately adjacent thereto are encased by a metal sheath 2 having a thickness that is not constant over the whole length thereof.

More precisely, the metal sheath 2 is directly in contact with the metal cable 1 and comprises a central portion 3 (corresponding to the loop) having a first thickness $\varepsilon 1$, and two end portions 4 and 5 having a second thickness $\varepsilon 2$ that is smaller than the former. The two end portions are smoothly joined to the central one by two tapered blending sections 6 and 7, i.e. having a progressively increasing thickness.

Although in general the values of $\varepsilon 1$ and $\varepsilon 2$ are selected depending on the load the anchor has to withstand, since the tube contributes, as a resisting structure, to bear the applied load, nevertheless the thicknesses $\varepsilon 1$ and $\varepsilon$ satisfy the following relationship:

$$0.2 \, \varepsilon 1 < \varepsilon 2 < 0.7 \, \varepsilon 1.$$

Preferably, $\varepsilon 2$ is about equal to $\varepsilon 1/2$ for tubes having a medium thickness, and to about $\varepsilon 1/3$ for large thickness tubes.

The inclination or tapering angle $\delta$ of the joining sections 6 and 7 is comprised between 6° and 10°, preferably about 7°, and however the end zones of the joining sections have rounded edges. The angle $\beta$ formed by the two approaching portions of the loop is 40° when the angle $\alpha$ of the loop curved portion is 220°.

Advantageously the metal sheath 2 is formed from a seamless steel tube (SS), having an ultimate strength larger than 40 kg/mm$^2$ and a yield strength larger than 24 kg/mm$^2$. Preferably the required configuration of the sheath his obtained by machining (turning) a metal tube having a constant wall thickness equal to $\varepsilon 1$. As an alternative, the tubular sheath could be extruded. The metal sheath 2 is protected both externally and internally against the mechanical wear and the weather corrosion by means of a hot zinc coating (applied by immersion).

The central portion 3 having a thickness $\varepsilon 1$ extends along the whole loop and the two portions immediately adjacent thereto in which the two portions of the tube (as well as the cable portions) are parallel. The tube end portions 4, 5 having a thickness $\varepsilon 2$ extend along the two cable sections that are parallel and subsequent to the joining sections 6 and 7. The two end portions 8 and 9 of the cable are uncovered. In use, the anchor is inserted into a concrete block or into a hole drilled in the rock 11 up to a point H that is located below the joining sections 6 and 7. In correspondence of such point, the two portions 4 and 5 of the metal tube are parallel and sligthly spaced from each other because of the reduced thickness of the tube.

The inner diameter $\phi T_{int}$ of sheath 2 is chosen so that the sheath adheres as tigthly as possible to the cable strands along the whole cable circumference, almost to form a single body therewith. This way, after being bent, the sheath exhibits neither deformations over the whole curved arc, nor diametral distorsions that could become failure starting points.

The inner diameter $\phi T_{int}$ of the tube is given by $\phi f + 1$ mm (with a tolerance of $\pm 0,1$ mm) where $\phi f$ is the cable diameter, thus ensuring a minimum thickness of the zinc coating of 30/100, and the cable is introduced into the sheath with a very small play, or in case is sligthly forced.

The mean bending radius Rm and the outer diameter $\phi T_{est}$ of the tube satisfy the relationship:

$$1.6 < Rm/\phi T_{est} < 2.5$$

and preferably

$$1.8 < Rm/\phi T_{est} < 2.3$$

The angle $\alpha$, i.e. the angular extension of the loop curved portion, is at least 215°, and preferably 220°. The next two portions of the tube are relatively short and substantially straight and become parallel to each other through a counterturn in each arm, this counterturn having the same bending radius Rm and extending over an arc of at least 17,5°, and preferably of 20°, to form a straight thimble.

With reference to the non-limiting embodiment shown in the Figures, the loop (inner) diameter or span G and the overall length Lt of the loop are given by:

$$G = 2Rm - \phi T$$

and

$$Lt = (Rm - \phi T/2) + (Rm - \phi T/2)/\text{sen} \, 20°.$$

Preferably, to accomplish the function of protecting the cable against rust caused by condensation moisture, water and weather influences, the parallel arms of the sheath have a reduced thickness (preferably to 1/2 or 1/3 of $\varepsilon 1$) for a length not shorter than 8.5 $\phi T$, and in order to protect the cable in the portion cemented into the concrete, the length of the cemented portion is not shorter than 7$\phi T$.

Although the invention has been described with particular reference to a specific preferred embodiment, the invention is defined in the appended claims.

**Claims**

1. A wire cable anchor, particularly for protection systems against rockfall and avalanches, comprising a length (1) of metal wire cable bent to form a loop (10), and a metal sheath at least partially encasing the wire (2), and a portion to be secured in the ground, characterized in that said metal sheath (2) is directly in contact with said cable (1) and provides a central portion (3) having a first thickness ($\varepsilon 1$), and two end portions (4, 5) having a second thickness ($\varepsilon 2$) smaller than the former, the two end portions (4, 5) being connected to said central portion (3) by two joining sections (6, 7) having a progressively decreasing thickness, the portion (3) with said first thickness ($\varepsilon 1$) extending along the whole loop (10), while said end portions (4, 5) having said second thickness ($\varepsilon 2$) extend along cable sections that are parallel.

2. A wire cable anchor according to claim 1, characterized in that said thicknesses $\varepsilon 1$ and $\varepsilon$ satisfy the

relationship:

$$0.2\ \varepsilon 1 < \varepsilon 2 < 0.7\ \varepsilon 1.$$

3. A wire cable anchor according to claim 1 or 2, characterized in that the tapering angle ($\delta$) of said joining sections (6, 7) is comprised between 6 and 10°, and the edges of the end zones of said joining sections (6, 7) are rounded.

4. A wire cable anchor according to the preceding claims, characterized in that both the inner surfaces and the outer surface of said metal sheath (2) are covered by a hot zinc coating.

5. A wire cable anchor according to the preceding claims, characterized in that the two tube portions to be cemented are parallel to each other.

6. A wire cable anchor according to the preceding claims, characterized in that:

$$\phi T_{in} = \phi f + 1\ mm$$

where $\phi T_{in}$ is the inner diameter of said sheath and $\phi f$ is the diameter of said cable (1).

7. A wire cable anchor according to the preceding claims, characterized in that the mean bending radius Rm and the outer diameter $\phi T_{est}$ of the sheath are bound by the following relationship:

$$1.6 < Rm/\phi T_{est} < 2.5$$

8. A wire cable anchor according to the preceding claims, characterized in that said loop comprises:

- a loop angle ($\alpha$) of at least 215°;
- two substantially straight short sections; and
- a counterturn for each loop arm having a bending radius Rm and extending over an arc of at least 17.5°.

9. A wire cable anchor according to the preceding claims, characterized in that the length of the parallel sections of sheath with a reduced thickness is not shorter than 8.5 $\phi T$, and the length of the portion cemented in the concrete is not shorter than 7$\phi T$.

10. A wire cable anchor according to the preceding claims, characterized in that said metal sheath is obtained by turning a seamless steel tube (SS) having a thickness equal to $\varepsilon 1$.

## Patentansprüche

1. Seilanker, insbesondere für Schutzsysteme gegen Steinschlag und Lawinen, umfassend eine Länge (1) eines Metallseils, das so gebogen ist, um eine Schlaufe (10) zu bilden, und eine Metallumhüllung (2), die das Seil zumindest teilweise umschließt, und einen Abschnitt, der im Boden zu verankern ist, dadurch gekennzeichnet, dass die Metallumhüllung (2) mit dem Seil (1) in direktem Kontakt steht und einen mittigen Abschnitt (3) umfasst, der eine erste Stärke ($\varepsilon 1$) und zwei Endabschnitte (4, 5) mit einer zweiten, geringeren Stärke ($\varepsilon 2$) als die erste aufweist, wobei die zwei Endabschnitte (4, 5) mit dem mittigen Abschnitt (3) durch zwei Verbindungsabschnitte (6, 7) mit einer zunehmend geringer werdenden Stärke verbunden ist und der Abschnitt (3) mit der ersten Stärke ($\varepsilon 1$) sich über die gesamte Schlaufe (10) erstreckt, wohingegen die Endabschnitte (4, 5) mit der zweiten Stärke ($\varepsilon 2$) sich entlang von parallel angeordneten Seilabschnitte erstrecken.

2. Seilanker nach Anspruch 1, dadurch gekennzeichnet, dass die Stärken $\varepsilon 1$ und $\varepsilon 2$ dem Verhältnis:

$$0{,}2\ \varepsilon 1 < \varepsilon 2 < 0{,}7\ \varepsilon 1$$

entsprechen.

3. Seilanker nach Anspruch 1 oder 2, dadurch gekennzeichnet, dass der spitze Winkel ($\delta$) der Verbindungsabschnitte (6, 7) zwischen 6 und 10° beträgt und die Kanten der Endbereiche der Verbindungsabschnitte (6, 7) abgerundet sind.

4. Seilanker nach den vorhergehenden Ansprüchen, dadurch gekennzeichnet, dass sowohl die innere wie auch die äußere Oberfläche der Metallumhüllung (2) mittels Feuerverzinkung beschichtet sind,

5. Seilanker nach den vorhergehenden Ansprüchen, dadurch gekennzeichnet, dass die zwei einzuzementierenden Rohrabschnitte parallel zueinander verlaufen.

6. Seilanker nach den vorhergehenden Ansprüchen, dadurch gekennzeichnet, dass:

$$ØT_{in} = Øf + 1mm$$

wobei $ØT_{in}$ der Innendurchmesser der Umhüllung und $Øf$ der Durchmesser des Seils (1) ist.

7. Seilanker nach den vorhergehenden Ansprüchen, dadurch gekennzeichnet, dass der mittlere Biegeradius Rm und der Außendurchmesser $\emptyset T_{est}$ der Umhüllung durch folgendes Verhältnis definiert sind:

$$1,6 < Rm/T_{est} < 2,5$$

**8.** Seilanker nach den vorhergehenden Ansprüchen, dadurch gekennzeichnet, dass die Schlaufe umfasst:

- einen Schlaufenwinkel ($\alpha$) von mindestens 215°;
- zwei im wesentlichen gerade kurze Abschnitte; und
- eine Gegenwindung für jeden Schlaufenarm mit einem Biegeradius Rm, die sich über einen Bogen vom mindestens 17,5° erstreckt.

**9.** Seilanker nach den vorhergehenden Ansprüchen, dadurch gekennzeichnet, dass die Länge der parallelen Abschnitte der Umhüllung mit einer verringerten Stärke nicht kürzer als 8,5 $\emptyset T$ ist und die Länge der im Beton einzementierten Abschnitte nicht kürzer als 7$\emptyset T$ ist.

**10.** Seilanker nach den vorhergehenden Ansprüchen, dadurch gekennzeichnet, dass die Metallumhüllung durch Drehen eines nahtlosen Stahlrohres (SS) mit einer Stärke gleich $\varepsilon 1$ erzielt wird.

**Revendications**

**1.** Ancrage de câble, en particulier pour des systèmes de protection contre les chutes de pierres et les avalanches, comportant une longueur (1) de câble métallique courbée pour former une boucle (10), un fourreau métallique (2) enfermant au moins partiellement le câble et une partie à fixer dans le sol, **caractérisé en ce que** ledit fourreau métallique (2) est directement au contact dudit câble (1) et fournit une partie centrale (3) ayant une première épaisseur ($\varepsilon 1$) et deux parties d'extrémité (4, 5) ayant une deuxième épaisseur ($\varepsilon 2$) plus petite que la précédente, les deux parties d'extrémité (4, 5) étant connectées à ladite partie centrale (3) par deux sections de jonction (6, 7) ayant une épaisseur diminuant progressivement, la partie (3) de ladite première épaisseur ($\varepsilon 1$) s'étendant le long de la boucle (10) tout entière, tandis que lesdites parties d'extrémité (4, 5) de ladite deuxième épaisseur ($\varepsilon 2$) s'étendent le long de sections parallèles du câble.

**2.** Ancrage de câble selon la revendication 1, **caractérisé en ce que** lesdites épaisseurs ($\varepsilon 1$) et ($\varepsilon 2$) satisfont à la relation :

$$0,2 \; \varepsilon 1 < \varepsilon 2 < 0,7 \; \varepsilon 1.$$

**3.** Ancrage de câble selon la revendication 1 ou 2, **caractérisé en ce que** l'angle d'effilage ($\delta$) desdites sections de jonction (6, 7) est compris entre 6 et 10°, et en ce que les bords des zones d'extrémité desdites sections de jonction (6, 7) sont arrondis.

**4.** Ancrage de câble selon les revendications précédentes, **caractérisé en ce qu'**à la fois les surfaces internes et la surface externe dudit fourreau métallique (2) sont recouvertes par un revêtement de zinc à chaud.

**5.** Ancrage de câble selon les revendications précédentes, **caractérisé en ce que** les deux parties tubulaires à cimenter sont parallèles l'une à l'autre.

**6.** Ancrage de câble selon les revendications précédentes, **caractérisé en ce que** :

$$\phi T_{in} = \phi f + 1 \text{ mm}$$

$\phi T_{in}$ étant le diamètre intérieur dudit fourreau et $\phi f$ étant le diamètre dudit câble (1).

**7.** Ancrage de câble selon les revendications précédentes, **caractérisé en ce que** le rayon de courbure moyen Rm et le diamètre extérieur $\phi T_{est}$ du fourreau sont liés par la relation suivante :

$$1,6 < Rm/\phi T_{est} < 2,5$$

**8.** Ancrage de câble selon les revendications précédentes, **caractérisé en ce que** ladite boucle est constituée par :

- un angle de boucle ($\alpha$) d'au moins 215° ;
- deux sections courtes sensiblement droites ; et
- un contre-tour pour chaque bras de boucle ayant un rayon de courbure Rm et s'étendant sur un arc d'au moins 17,5°.

**9.** Ancrage de câble selon les revendications précédentes, **caractérisé en ce que** la longueur des sections parallèles de fourreau à épaisseur réduite n'est pas inférieure à 8,5 $\phi T$ et la longueur de la partie cimentée dans le béton n'est pas inférieure à 7 $\phi T$.

**10.** Ancrage de câble selon les revendications précédentes, **caractérisé en ce que** ledit fourreau métallique est obtenu en tournant un tube d'acier sans soudure (SS) ayant une épaisseur égale à $\varepsilon 1$.

*FIG. 1*

*FIG. 2*